# EUROPÄISCHE PATENTSCHRIFT

(11) **EP 3 235 183 B1**
(45) Veröffentlichungstag und Bekanntmachung des Hinweises auf die Patenterteilung: **13.11.2019**
(21) Anmeldenummer: 15813718.2
(22) Anmeldetag: 04.12.2015
(51) Int. Cl.: H04L 12/40, G05B 19/042

(54) **FUNKTIONSANSCHLUSSEINHEIT MIT EINEM SERVICEMODUL**
FUNCTION CONNECTION UNIT COMPRISING A SERVICE MODULE
UNITÉ FONCTIONNELLE DE RACCORDEMENT DOTÉE D'UN MODULE DE SERVICE

(30) Priorität: 18.12.2014 DE 102014119065
(43) Veröffentlichungstag der Anmeldung: 25.10.2017
(73) Patentinhaber: Phoenix Contact GmbH & Co KG, 32825 Blomberg (DE)
(72) Erfinder: KRUMSIEK, Dietmar, 31860 Emmerthal (DE)
(74) Vertreter: Patentship Patentanwaltsgesellschaft mbH
(86) Internationale Anmeldenummer: PCT/EP2015/078663
(87) Internationale Veröffentlichungsnummer: WO 2016/096479

(56) Entgegenhaltungen:
- WO-A1-2013/178210
- DE-A1-102011 006 590
- BALLUFF GMBH: "IO-Link, System Components for Industrial Communication", INTERNET CITATION, 31. Juli 2008 (2008-07-31), Seiten 1-24, XP002593081, Gefunden im Internet: URL:http://www.balluff.com/NR/rdonlyres/F9 187A45-9D63-478F-93D0-2CC7909B4F78/0/BR_85 5628_EN.pdf [gefunden am 2010-07-21]

## Beschreibung

Die vorliegende Erfindung betrifft eine Funktionsanschlusseinheit mit einem Servicemodul.

Zum Anschluss und zur Konfiguration von Funktionsmodulen der Automatisierungstechnik wie Aktoren oder Sensoren werden üblicherweise Funktionsanschlusseinheiten, auch Eingangs-Ausgangs-Funktionsanschlusseinheiten eingesetzt, welche beispielsweise gemäß dem Single-Drop Digital Communication Interface for Small Sensors and Actuators (SDCI)-Protokoll arbeiten. Ein Beispiel einer SDCI-Funktionsanschlusseinheit ist beispielsweise ein I/O-Link-Master, welcher beispielsweise in der DE 10 2011 006590 A1 beschrieben ist.

Die an eine Funktionsanschlusseinheit angeschlossenen Funktionsmodule müssen für die gewünschte Betriebsweise jedoch parametrisiert, also gerätespezifisch konfiguriert werden. Dies erfolgt üblicherweise durch eine Parametrisierung der Funktionsmodule, wobei beispielsweise Sensorempfindlichkeiten eingestellt werden können. Die Parametrierung der Funktionsmodule kann über einen Feldbus, an den eine Funktionsanschlusseinheit angeschlossen werden kann, erfolgen. Hierzu ist jedoch eine Feldbus-Kommunikation notwendig.

Die Internetveröffentlichung der Balluff GmbH: "IO-link, System Components for Industrial Communication", vom 31. Juli 2008 beschreibt ein Profibus-Gerät mit acht IO-Link-Schnittstellen und zwölf Eingabe-/Ausgabe-Schnittstellen. Hierbei ist das Profibus-Gerät als ein IO-Link Master ausgebildet.

Die Druckschrift WO 2013/178210 A1 beschreibt eine Masterbaugruppe 110, an welcher über eine IO-Link-Verbindung 111 ein IO-Link-Device 113 und über eine IO-Link-Verbindung 112 ein Sicherheitsgerät 114 angeschlossen ist. Hierbei ist die Masterbaugruppe 110 als IO-Link Master ausgebildet.

Es ist daher die Aufgabe der vorliegenden Erfindung, ein effizienteres Konzept für den Anschluss bzw. Parametrisierung von Funktionsmodulen in der Automatisierungstechnik zu schaffen.

Diese Aufgabe wird durch die Gegenstände mit den Merkmalen nach den unabhängigen Ansprüchen gelöst. Vorteilhafte Ausführungsformen sind Gegenstand der abhängigen Ansprüche, der Beschreibung und der Zeichnungen.

Die vorliegende Erfindung basiert auf der Erkenntnis, dass die obige Aufgabe durch ein Servicemodul gelöst werden kann, das an einen Funktionsmodulanschluss einer Funktionsanschlusseinheit, welcher üblicherweise für den Anschluss eines Funktionsmoduls vorgesehen ist, anschließbar ist. Das Servicemodul kann so mit einer Inbetriebnahmesoftware eines Computers kommunizieren und von der Inbetriebnahmesoftware Parameterdaten empfangen und die Parameterdaten an die Funktionsanschlusseinheit über einen gewöhnlichen Funktionsmodulanschluss übertragen. Auf diese Weise wird die Notwendigkeit einer gesonderten Serviceschnittstelle an der Funktionsanschlusseinheit vermieden. Außerdem ist eine Feldbus-Anbindung zur Parametrierung von Funktionsmodulen nicht mehr notwendig.

Die Parameterdaten können anhand einer allgemeinen Parameterdatenbeschreibung, welche parametrisierbare Parameter auflistet und beispielsweise in der Gestalt einer XML-Datei vorliegt, beispielsweise durch einen Benutzer mittels eines Computers und der Inbetriebnahmesoftware erstellt werden.

Gemäß einem Aspekt betrifft die Erfindung eine Funktionsanschlusseinheit für den Anschluss von Funktionsmodulen, mit einer Mehrzahl von Funktionsmodulanschlüssen, an welche die Funktionsmodule für eine Kommunikation gemäß einem ersten Kommunikationsprotokoll anschließbar sind; und mit einem Servicemodul mit einem Serviceanschluss, welcher zur Kommunikation gemäß dem ersten Kommunikationsprotokoll mit zumindest einem Funktionsmodulanschluss, welcher parametrisierbar sein kann, verbindbar ist, wobei das Servicemodul einen Kommunikationsanschluss zur Kommunikation gemäß einem zweiten Kommunikationsprotokoll aufweist; wobei das Servicemodul ausgebildet ist, an dem Kommunikationsanschluss gemäß dem zweiten Kommunikationsprotokoll anliegende Parameterdaten an dem Serviceanschluss gemäß dem ersten Kommunikationsprotokoll bereitzustellen; und wobei die Funktionsanschlusseinheit ausgebildet ist, zumindest ein Funktionsmodul auf der Basis der Parameterdaten zu parametrisieren. Die Parameterdaten können über den Serviceanschluss ausgegeben werden.

Gemäß einer Ausführungsform ist das zweite Kommunikationsprotokoll ein USB-Protokoll. Somit ist das Servicemodul beispielsweise an einen USB-Anschluss eines Computers anschließbar und kann mit einer Inbetriebnahmefunktionalität des Computers, beispielsweise einer Inbetriebnahmesoftware, kommunizieren.

Gemäß einer Ausführungsform ist das Servicemodul ausgebildet, eine Protokollumwandlung durchzuführen, um die gemäß dem zweiten Kommunikationsprotokoll empfangenen Parameterdaten an den Funktionsmodulanschluss gemäß dem ersten Kommunikationsprotokoll zu übertragen. Hierbei kann das Servicemodul eine Umformatierung der Parameterdaten oder einer Anordnung der Parameterdaten in einem Payload-Feld eines Datenrahmens gemäß dem ersten Kommunikationsprotokoll vornehmen, damit die Parameterdaten gemäß dem ersten Kommunikationsprotokoll lesbar sind.

Gemäß einer Ausführungsform ist das erste Kommunikationsprotokoll ein Single-Drop Digital Communication Interface for Small Sensors and Actuators (SDCI) Protokoll, insbesondere ein I/O-Link-Protokoll.

Gemäß einer Ausführungsform ist die Funktionsanschlusseinheit ein Master gemäß dem Single-Drop Digital Communication Interface for Small Sensors and Actuators (SDCI), insbesondere ein I/O-Link-Master.

Gemäß einer Ausführungsform ist die Funktionsanschlusseinheit ausgebildet, das mit zumindest einem Funktionsmodulanschluss verbundene Servicemodul zu detektieren. Hierzu kann die Funktionsanschlusseinheit ausgebildet sein, die Funktionsmodulanschlüsse abzutasten, um festzustellen, ob an einem Funktionsmodulanschluss statt eines Funktionsmoduls das Servicemodul angeschlossen ist.

Gemäß einer Ausführungsform ist das Servicemodul ausgebildet, an den Serviceanschluss ein Kennsignal anzulegen, das das Servicemodul identifiziert, und wobei die Funktionsanschlusseinheit ausgebildet ist, das Servicemodul an dem Funktionsmodulanschluss auf der Basis des Kennsignals zu erkennen oder von einem Funktionsmodul zu unterscheiden. Das Kennsignal kann ein vorbestimmtes Kennsignal, beispielsweise ein vorbestimmtes Bitmuster sein, das das Servicemodul als solches identifiziert.

Gemäß einer Ausführungsform ist die Funktionsanschlusseinheit ausgebildet, die ausgelesenen Parameterdaten zu speichern. Hierzu kann die Funktionsanschlusseinheit einen internen Speicher aufweisen. Auf diese Weise kann das Servicemodul von dem Funktionsmodulanschluss getrennt werden und diesen für ein weiteres Funktionsmodul freigeben, dass beispielswiese anhand der gespeicherten Parameterdaten parametrisiert werden kann.

Gemäß einer Ausführungsform ist das Servicemodul von dem Funktionsmodulanschluss lösbar, wobei mit dem Funktionsmodulanschluss ein Funktionsmodul elektrisch verbindbar ist, und wobei die Funktionsanschlusseinheit ausgebildet ist, das anstelle des Servicemoduls mit dem Funktionsmodulanschluss verbundene Funktionsmodul unter Verwendung der in der Funktionsanschlusseinheit vorgespeicherten Parameterdaten gerätespezifisch zu parametrisieren.

Gemäß einer Ausführungsform ist die Funktionsanschlusseinheit ausgebildet, das Servicemodul zur Übertragung der Parameterdaten über den Serviceanschluss anzuweisen. Hierzu kann die Funktionsanschlusseinheit ein Trigger-Signal erzeugen, dass das Servicemodul zur Übertragung der Parameterdaten antriggert.

Gemäß einer Ausführungsform ist das Servicemodul deaktivierbar, wobei die Funktionsanschlusseinheit ausgebildet ist, das Servicemodul zu aktivieren. Die Aktivierung kann beispielsweise mittels eines Wake-Up-Signals erfolgen. Die Aktivierung kann jedoch automatisch bei Anlegen einer Spannungsversorgung an die Funktionsanschlusseinheit bzw. bei Power-Up erfolgen.

Gemäß einer Ausführungsform geben die Parameterdaten physikalische Werte von gerätespezifischen Parametern an.

Die Parameterdaten ermöglichen eine gerätespezifische Parametrisierung bzw. Konfiguration der Funktionsmodule. Die Parameterdaten können beispielsweise technische Empfindlichkeiten, Schaltverzögerungen, Kennlinien oder Wertebereiche der Funktionsmodule angeben. Außerdem können die Parameterdaten Informationen zur Identifikation der Funktionsmodule, Prozess- und Diagnosedaten, Kommunikationseigenschaften und/oder den Aufbau des Anwender-Interfaces in Engineering Tools angeben. Die Parameterdaten können in der Gestalt einer oder mehrerer Dateien vorliegen, beispielsweise einer Hauptdatei und einer optionalen externen Sprachdatei, beispielsweise in XML-Format. Die Parameterdaten können ferner Bilddateien im PNG-Format umfassen. Im Kontext der I/O-Link-Technologie können die Parameterdaten in einer I/ODD-Datei (I/O Device Description) vorliegen.

Gemäß einer Ausführungsform sind die Funktionsmodule Sensoren oder Aktoren, beispielsweise gemäß der Norm IEC 61131-9.

Gemäß einer Ausführungsform bildet das Servicemodul eine Kommunikationsschnittstelle der Funktionsanschlusseinheit für die Übertragung von Daten, insbesondere von Parameterdaten, Steuerbefehlen zur Steuerung der Funktionsmodule oder zum Auslesen von Daten aus der Funktionsmodulen oder zur Steuerung der Funktionsanschlusseinheit oder zum Auslesen von Daten aus der Funktionsanschlusseinheit.

Gemäß einem weiteren Aspekt betrifft die Erfindung ein Servicemodul zur Bereitstellung von Parameterdaten zur Parametrisierung von Funktionsmodulen, insbesondere Sensoren oder Aktoren, wobei das Servicemodul einen Serviceanschluss zur Ausgabe der Parameterdaten gemäß einem ersten Kommunikationsprotokoll aufweist, wobei das Servicemodul einen Kommunikationsanschluss zum Empfang der Parameterdaten gemäß einem zweiten Kommunikationsprotokoll aufweist, und wobei das Servicemodul ausgebildet ist, die gemäß dem zweiten Kommunikationsprotokoll empfangenen Parameterdaten gemäß dem ersten Kommunikationsprotokoll auszugeben.

Das Servicemodul kann das im Zusammenhang mit der Funktionsanschlusseinheit beschriebene Servicemodul sein bzw. dessen Merkmale aufweisen. Weitere Merkmale des Servicemoduls ergeben sich daher unmittelbar aus den Merkmalen des im Zusammenhang mit der Funktionsanschlusseinheit beschriebenen Servicemoduls.

Die Parameterdaten können die im Zusammenhang mit der Funktionsanschlusseinheit beschriebenen Parameterdaten sein.

Weitere Ausführungsbeispiele werden Bezug nehmend auf die beiliegenden Zeichnungen erläutert. Es zeigen:
- Fig. 1: eine schematische Darstellung eines Kommunikationssystems,
- Fig. 2: eine schematische Darstellung einer Funktionsanschlusseinheit mit angeschlossenen Funktionsmodulen, und
- Fig. 3A-D: ein Parametrisierungskonzept.

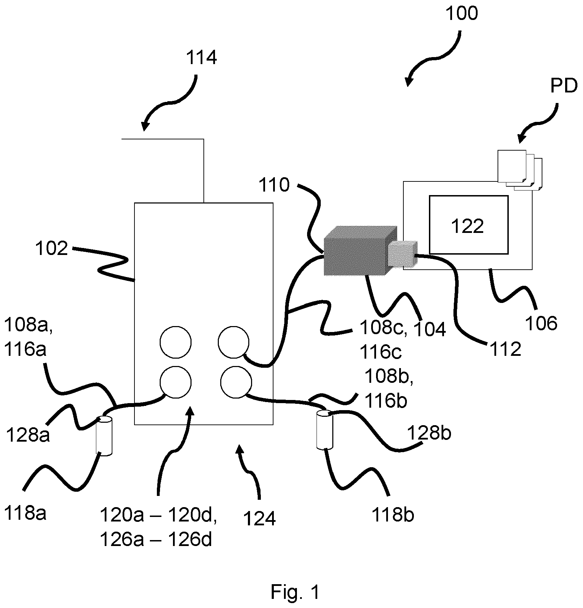

Die Fig. 1 zeigt eine schematische Darstellung eines Kommunikationssystems 100, das gemäß einer Ausführungsform eine Funktionsanschlusseinheit 102, ein Servicemodul 104, ein erstes Funktionsmodul 118a und ein zweites Funktionsmodul 118b aufweist.

Gemäß einer Ausführungsform verwendet das Kommunikationssystem 100 zur Kommunikation ein Kommunikationsprotokoll gemäß I/O-Link oder SDCI. I/O-Link ist eine Punkt-zu-Punkt-Schnittstelle für den Funktionsmodulanschluss beliebiger Sensorik und Aktuatorik an ein Steuerungssystem. Im Gegensatz zu klassischen Feldbussystemen erfolgt hierbei keine Busverdrahtung, sondern eine Parallelverdrahtung. Somit ist das Kommunikationssystem 100 für eine Punkt-zu-Punkt-Kommunikation ausgebildet, und zwar zwischen der Funktionsanschlusseinheit 102, des Servicemoduls 104 und den beiden Funktionsmodulen 118a, 118b.

Somit ist das Kommunikationssystem 100 gemäß einer Ausführungsform zur Anbindung von Funktionsmodulen 118a, 118b, wie beispielsweise Sensoren und/oder Aktuatoren gemäß der Norm IEC 61131-9 bzw. SDCI, ausgebildet.

Gemäß einer Ausführungsform sind die Funktionsanschlusseinheit 102 als SDCI-Master oder I/O-Master, das Servicemodul 104 und die beiden Funktionsmodule 118a, 118b jeweils als SDCI Slaves oder I/O-Link Devices ausgebildet.

Bei den Funktionsmodulen 118a, 118b handelt es sich gemäß einer Ausführungsform um I/O-Link-Devices bzw. SDCI Slaves, welche eine Seriennummer aufweisen oder Parameterdaten betreffend Parameter, wie Empfindlichkeiten, Schaltverzögerungen, Kennlinien oder Wertebereiche, besitzen, die über das I/O-Link-Protokoll lesbar oder gerätespezifisch charakterisierbar sind.

Das Kommunikationssystem 100 kann gemäß einer Ausführungsform mit dem Feldbus 114 kommunizieren. Bei dem Feldbus 114 kann es sich beispielsweise um PROFIBUS, PROFINET, Interbus, AS-i, EVA-CAT oder Powerlink handeln.

Die Funktionsanschlusseinheit 102 weist gemäß einer Ausführungsform vier Funktionsmodulanschlüsse 120a - 120d auf, die beispielswiese als I/O-Ports ausgebildet sind. Gemäß einer Ausführungsform sind die Funktionsmodulanschlüsse 120a - 120d als I/O-Link oder SDCI kompatible Schnittstellen 126a - 126d ausgebildet.

An dem ersten Funktionsmodulanschluss 120a ist eine erste Funktionsmodulanschlussleitung 116a angeschlossen, die eine erste Datenübertragungsverbindung 108a zur Datenübertragung von und zu dem ersten Funktionsmodul 118a bildet.

Gemäß einer Ausführungsform ist die erste Funktionsmodulanschlussleitung 116a durch ein Standard 3-Leiter-Sensor-/Aktuatorkabel gebildet. Alternativ kann diese erste Datenübertragungsverbindung 108a drahtlos, beispielsweise durch eine Funkstrecke, oder durch einen Lichtwellenleiter gebildet sein. Zum Anschluss an den ersten Funktionsmodulanschuss 120a kann das erste Funktionsmodul 118a eine I/O-Link- oder SDCI kompatible Schnittstelle 128a aufweisen.

Ein zweiter Funktionsmodulanschluss 120b der Funktionsanschlusseinheit 102 ist über eine zweite Datenübertragungsverbindung 108b, gebildet durch eine zweite Funktionsmodulanschlussleitung 116b, mit dem zweiten Funktionsmodul 118b zur bidirektionalen Datenübertragung verbunden. Gemäß einer Ausführungsform ist die zweite Funktionsmodulanschlussleitung 116b durch ein Standard 3-Leiter-Sensor-/Aktuatorkabel gebildet.

Alternativ kann diese zweite Datenübertragungsverbindung 108b drahtlos, beispielsweise durch eine Funkstrecke, oder durch einen Lichtwellenleiter, gebildet sein. Zum Anschluss an den zweiten Funktionsmodulanschuss 120b weist das zweite Funktionsmodul 118b eine I/O-Link oder SDCI kompatible Schnittstelle 128b auf.

An dem weiteren Funktionsmodulanschluss 120d ist das Servicemodul 104 angeschlossen. Das Servicemodul 104 weist einen Serviceanschluss 110 auf, der gemäß einer Ausführungsform als I/O-Link oder SDCI kompatible Schnittstelle ausgebildet ist, um eine weitere, dritte Datenübertragungsverbindung 108c über eine dritte Funktionsmodulanschlussleitung 116c mit der Funktionsanschlusseinheit 102 zur Datenübertragung zu bilden. Gemäß einer Ausführungsform ist die dritte Funktionsmodulanschlussleitung 116c durch ein Standard 3-Leiter-Sensor-/Aktuatorkabel gebildet. Alternativ kann diese dritte Datenübertragungsverbindung 108c drahtlos, beispielsweise durch eine Funkstrecke, oder durch einen Lichtwellenleiter gebildet sein. Gemäß einer Ausführungsform ist die dritte Datenübertragungsverbindung 108c zur bidirektionalen Datenübertragung ausgebildet. Alternativ kann die dritte Datenübertragungsverbindung 108c zur unidirektionalen Datenübertragung ausgebildet sein, um beispielsweise ein Auslesen oder Empfangen der Parameterdaten aus der Inbetriebnahmesoftware 106 zu ermöglichen

Das Servicemodul 104 weist ferner einen Kommunikationsanschluss 112 auf, der gemäß einer Ausführungsform als eine USB-Schnittstelle ausgebildet ist.

Der Kommunikationsanschluss 112 ist gemäß einer Ausführungsform mit einem Computer unidirektional oder bidirektional verbindbar, auf welchem die Inbetriebnahmesoftware 106 installiert ist.

Gemäß einer Ausführungsform sind der Kommunikationsanschluss 112 und der Serviceanschluss 110 gleich oder unterschiedlich ausgebildet.

Gemäß einer Ausführungsform ist der Kommunikationsanschluss 112 zum Empfang der Parameterdaten gemäß einem zweiten Kommunikationsprotokoll ausgebildet. Dabei unterscheiden sich das erste und zweite Kommunikationsprotokoll voneinander. Gemäß einer Ausführungsform handelt es sich bei dem ersten Kommunikationsprotokoll um ein Kommunikationsprotokoll gemäß I/O-Link oder SDCI. Somit führt das Servicemodul 104 eine Protokollumwandlung durch, um die gemäß dem zweiten Kommunikationsprotokoll empfangenen Parameterdaten an den parametrisierbaren Funktionsmodulanschluss 120a-120d gemäß dem ersten Kommunikationsprotokoll zu übertragen.

Die Parameterdaten können durch einen Benutzer mittels der Inbetriebnahmesoftware 106 anhand einer Parameterbeschreibung PD, welche Funktionsmodulbeschreibungen bereitstellen kann, erzeugt werden.

Die Parameterbeschreibung PD gibt beispielsweise parametrisierbare Parameter an, welche durch einen Benutzer mittels der Bedienoberfläche 122 der Inbetriebnahmesoftware 106 parametrisiert werden können, um Parameterdaten zu erhalten. Hierzu kann der Benutzer den Parametern beispielsweise physikalische Werte wie Empfindlichkeit oder Reaktionszeit oder Sensorbereich zuordnen.

Die Funktionsmodulbeschreibungen können beispielsweise umfassen: Information zu Kommunikationseigenschaften, Informationen zu Funktionsmodulparametern, Funktionsmodulparameter wie z. B. Empfindlichkeiten, Schaltverzögerungen oder Kennlinien, Identifikations-, Prozess- und Diagnosedaten, ein Abbild sowie ein Logo des Herstellers. Die Funktionsmodulbeschreibungen werden gemäß der I/O-Link Spezifikation auch als IODD-Datei (I/O Device Description) bezeichnet. Sie können aus einer oder mehreren XML-Dateien, die das Funktionsmodul, wie beispielsweise die beiden Funktionsmodule 118a, 118b, beschreiben und/oder einer oder mehrerer Bilddateien im PNG-Format bestehen.

Die Bedienoberfläche 122 gehört zu einem Programmiertool, welcher die Inbetriebnahmesoftware 106 bildet, die einem Anwender Funktionsmodulbeschreibungen in grafischer Form zur Verfügung stellt und Eingaben des Anwenders erlaubt.

Die Funktionsanschlusseinheit 102 weist gemäß einer Ausführungsform ein Bedienelement 124 auf, das gemäß einer Ausführungsform als Taster ausgebildet ist. Die Funktion des Bedienelements 124 wird weiter unten erläutert.

Zur Parametrierung der Funktionsmodule 118a, 118b kann die Funktionsanschlusseinheit 102 ein Inbetriebnahmeprotokoll der Inbetriebnahmesoftware 106 über den Kommunikationsanschluss 112 des Servicemoduls 104 "tunneln". Hierbei kann ein Master-Slave-Protokoll, beispielsweise das I/O-Link-Protokoll durch die Funktionsanschlusseinheit 102 als Master verwendet werden, um einen Datenverkehr zu initiieren.

Hierzu kann die Funktionsanschlusseinheit 102 eine Inbetriebnahmefunktion aufweisen, beispielsweise eine Master-Inbetriebnahmefunktion, welche einen Slave, beispielsweise das Servicemodul 104 abfragt, ob Parameterdaten bzw. Konfigurationsdaten oder Befehle von einem Computer zu der Funktionsanschlusseinheit 102, insbesondere zu der Inbetriebnahmefunktion, gesendet worden sind.

Gemäß einer Ausführungsform nehmen nach der Konfiguration bzw. Parametrierung die Funktionsmodulanschlüsse 120a-120d ihre konfigurierten Parameter bzw. Modelle ein, beispielsweise Dig Input, Dig Output oder I/O-Link.

Wenn eine Funktionsanschlusseinheit 102 nach der Parametrierung, bei der beispielsweise die Funktionsmodulanschlüsse 120a-120d auf Dig Output gesetzt sind, in einem normalen Betriebsmodus betrieben wird, in dem Funktionsmodule 118a, 118b betrieben werden bzw. arbeiten, so kann gemäß einer Ausführungsform das Servicemodul 104 nicht mehr angesprochen werden bzw. kann abgeschaltet sein. Das Servicemodul 104 kann jedoch durch eine Eingabemöglichkeit, beispielswiese durch das Bedienelement 124, wieder aktiviert werden.

Gemäß einer Ausführungsform erkennt die Funktionsanschlusseinheit 102 als Master das Servicemodul 104 während einer Power-Up-Phase, in welcher die Funktionsanschlusseinheit 102 aktiviert wird.

Das Servicemodul 104 ist gemäß einer Ausführungsform ein I/O-Link-Device.

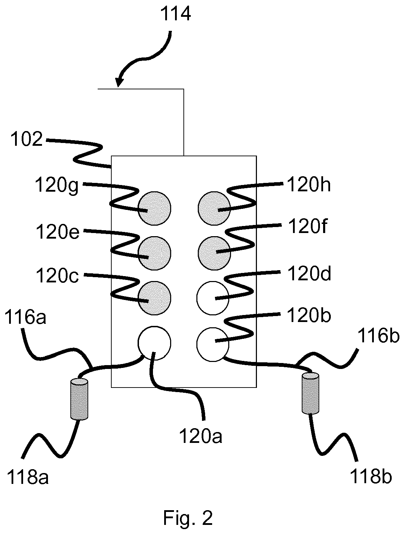

Die Fig. 2 zeigt eine schematische Darstellung der Funktionsanschlusseinheit 102 mit den beiden angeschlossenen Funktionsmodulen 118a, 118b nach Abschluss der Inbetriebnahme. Die Funktionsanschlusseinheit 102 weist acht Funktionsmodulanschlüsse 120a-120h auf, welche beispielswiese als I/O-Ports ausgebildet sind.

Die Parameterdaten könne beispielsweise in der Gestalt eines Datenrahmens übermittelt worden sein, in dem abschnittsweise Parameterbeschreibungen für die an den Funktionsmodulanschlüssen 120a-120h angeschlossenen Funktionsmodule 118a, 118b enthalten sind. So kann eine Zuordnung der Parameterbeschreibung PD zu dem jeweiligen Funktionsmodul 118a, 118b und Funktionsmodulanschluss 120a, 120b realisiert werden. Die Parameterbeschreibungen PD können gleich oder unterschiedlich sein. So können die Parameterbeschreibungen PD für die Funktionsmodule 118a, 118b, welche beispielsweise I/O-Sensoren sind, gleich oder unterschiedlich sein. Die übrigen Funktionsmodule an den übrigen Funktionsmodulanschlüssen 120c-120h können ebenfalls unterschiedlich parametriert werden.

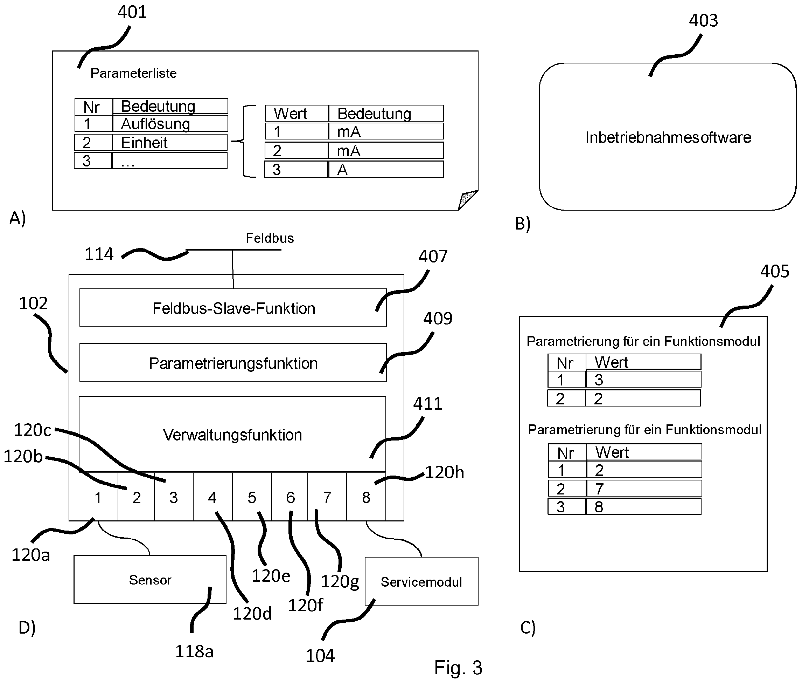

In den Fig. 3A-3D ist ein Parametrisierungskonzept anhand der Funktionsanschlusseinheit 102 dargestellt.

Fig. 3A zeigt eine Parameterliste 401 mit Parametern, wie beispielswiese Auflösung oder physikalische Einheiten. Die Parameterliste 401 wird beispielsweise mittels eines Computers, auf welchem die in Fig. 3B dargestellte Inbetriebnahmesoftware 403 ausgeführt wird, in Parameterdaten überführt. Die Inbetriebnahmesoftware 403 kann ferner beispielsweise die Bedienoberfläche 122 implementieren bzw. bereitstellen.
Die Parameterdaten werden dem Servicemodul 104 zugeleitet und, beispielsweise über den Funktionsmodulanschluss 120h, durch die Funktionsanschlusseinheit 102 ausgelesen.

Wie in Fig. 3C dargestellt können die Parameterdaten Parametrierungen für ein oder mehrere Funktionsmodule 118a, 118b angeben, wie beispielsweise physikalische Werte der gerätespezifischen Parameter.

In Fig. 3D ist eine beispielhafte Struktur der Funktionsanschlusseinheit 102 dargestellt. Die Funktionsanschlusseinheit 102 umfasst eine Feldbus-Slave-Funktionalität 407 zur Kommunikation über den Feldbus 114. Die Funktionsanschlusseinheit 102 umfasst ferner eine Parametrierungsfunktion 409 zur gerätespezifischen Parametrierung des Funktionsmoduls 118a. Die Funktionsanschlusseinheit 102 umfasst ferner eine Verwaltungsfunktionalität 411, welche die Funktionsanschlusseinheit 102 verwaltet. Die Verwaltungsfunktionalität 411 kann beispielsweise im Falle einer Realisierung eines I/O-Link-Masters durch die Funktionsanschlusseinheit 102 eine I/O-Link-Master-Software implementiert sein.

### Bezugszeichenliste

- 100: Kommunikationssystem
- 102: Funktionsanschlusseinheit
- 104: Servicemodul
- 106: Inbetriebnahmesoftware
- 108a: Datenübertragungsverbindung
- 108b: Datenübertragungsverbindung
- 108c: Datenübertragungsverbindung
- 110: Serviceanschluss
- 112: Kommunikationsanschluss
- 114: Feldbus
- 116a: Funktionsmodulanschlussleitung
- 116b: Funktionsmodulanschlussleitung
- 116c: Funktionsmodulanschlussleitung
- 118a: Funktionsmodul
- 118b: Funktionsmodul
- 120a: Funktionsmodulanschluss
- 120b: Funktionsmodulanschluss
- 120c: Funktionsmodulanschluss
- 120d: Funktionsmodulanschluss
- 120e: Funktionsmodulanschluss
- 120f: Funktionsmodulanschluss
- 120g: Funktionsmodulanschluss
- 120h: Funktionsmodulanschluss
- 122: Bedienoberfläche
- 124: Bedienelement
- 126a: Schnittstelle
- 126b: Schnittstelle
- 126c: Schnittstelle
- 126d: Schnittstelle
- 128a: Schnittstelle
- 128b: Schnittstelle
- PD: Parameterbeschreibung
- 401: Parameterliste
- 403: Inbetriebnahmesoftware
- 405: Parameterdaten
- 407: Feldbus-Slave-Funktionalität
- 409: Parametrierungsfunktion
- 411: Verwaltungsfunktionalität

## Patentansprüche

1. Funktionsanschlusseinheit (102) für den Anschluss von Funktionsmodulen (118a, 118b), mit einer Mehrzahl von Funktionsmodulanschlüssen (120a - 120h), an welche die Funktionsmodule (118a, 118b) für eine Kommunikation gemäß einem ersten Kommunikationsprotokoll anschließbar sind;
mit einem Servicemodul (104) mit einem Serviceanschluss (110), welcher zur Kommunikation gemäß dem ersten Kommunikationsprotokoll mit zumindest einem Funktionsmodulanschluss der Mehrzahl von Funktionsmodulanschlüssen (120a - 120h) verbindbar ist, wobei das Servicemodul (104) einen Kommunikationsanschluss (112) zur Kommunikation gemäß einem zweiten Kommunikationsprotokoll aufweist;
wobei das Servicemodul (104) ausgebildet ist, an dem Kommunikationsanschluss (112) gemäß dem zweiten Kommunikationsprotokoll anliegende Parameterdaten (405) an dem Serviceanschluss (110) gemäß dem ersten Kommunikationsprotokoll bereitzustellen; und
wobei die Funktionsanschlusseinheit (102) ausgebildet ist, zumindest ein Funktionsmodul (118a, 118b) auf der Basis der Parameterdaten (405) zu parametrisieren, wobei das Servicemodul ausgebildet ist, an den Serviceanschluss ein Kennsignal anzulegen, das das Servicemodul identifiziert.

2. Funktionsanschlusseinheit (102) nach Anspruch 1, wobei das zweite Kommunikationsprotokoll ein USB-Protokoll ist.

3. Funktionsanschlusseinheit (102) nach Anspruch 1 oder 2, wobei das Servicemodul (104) ausgebildet ist, eine Protokollumwandlung durchzuführen, um die gemäß dem zweiten Kommunikationsprotokoll empfangenen Parameterdaten (405) an den Funktionsmodulanschluss (120a - 120h) gemäß dem ersten Kommunikationsprotokoll zu übertragen.

4. Funktionsanschlusseinheit (102) nach einem der vorstehenden Ansprüche, wobei das erste Kommunikationsprotokoll ein Single-Drop Digital Communication Interface for Small Sensors and Actuators, SDCI, Protokoll ist.

5. Funktionsanschlusseinheit (102) nach einem der vorstehenden Ansprüche, wobei die Funktionsanschlusseinheit (102) ein Master gemäß dem Single-Drop Digital Communication Interface for Small Sensors and Actuators, SDCI, ist.

6. Funktionsanschlusseinheit (102) nach einem der vorhergehenden Ansprüche, wobei die Funktionsanschlusseinheit (102) ausgebildet ist, das mit zumindest einem Funktionsmodulanschluss (120a - 120h) verbundene Servicemodul (104) zu detektieren.

7. Funktionsanschlusseinheit (102) nach einem der vorhergehenden Ansprüche,
wobei das Servicemodul (104) ausgebildet ist, an den Serviceanschluss (110) ein Kennsignal anzulegen, das das Servicemodul (104) identifiziert, und wobei die Funktionsanschlusseinheit (102) ausgebildet ist, das Servicemodul (104) an dem Funktionsmodulanschluss (120a - 120h) auf der Basis des Kennsignals zu erkennen oder von einem Funktionsmodul (118a, 118b) zu unterscheiden.

8. Funktionsanschlusseinheit (102) nach einem der vorhergehenden Ansprüche, welche ausgebildet ist, die Parameterdaten (405) zu speichern.

9. Funktionsanschlusseinheit (102) nach Anspruch 8, wobei das Servicemodul (104) von dem Funktionsmodulanschluss (120a - 120h) lösbar ist, wobei mit dem Funktionsmodulanschluss (120a - 120h) ein Funktionsmodul (118a, 118b) elektrisch verbindbar ist, und wobei die Funktionsanschlusseinheit (102) ausgebildet ist, das anstelle des Servicemoduls (104) mit dem Funktionsmodulanschluss (120a - 120h) verbundene Funktionsmodul (118a, 118b) unter Verwendung der in der Funktionsanschlusseinheit (102) vorgespeicherten Parameterdaten (405) gerätespezifisch zu parametrisieren.

10. Funktionsanschlusseinheit (102) nach einem der vorhergehenden Ansprüche, welche ausgebildet ist, das Servicemodul (104) zur Übertragung der Parameterdaten (405) über den Serviceanschluss (110) anzuweisen.

11. Funktionsanschlusseinheit (102) nach einem der vorhergehenden Ansprüche,
wobei das Servicemodul (104) deaktivierbar ist, und wobei die Funktionsanschlusseinheit (102) ausgebildet ist, das Servicemodul (104) zu aktivieren.

12. Funktionsanschlusseinheit (102) nach einem der vorhergehenden Ansprüche,
wobei die Parameterdaten (405) physikalische Werte von gerätespezifischen Parametern angeben.

13. Funktionsanschlusseinheit (102) nach einem der vorhergehenden Ansprüche,
wobei das Servicemodul (104) eine Kommunikationsschnittstelle der Funktionsanschlusseinheit (102) für die Übertragung von Daten (405), Steuerbefehlen zur Steuerung der Funktionsmodule (118a, 118b) oder zum Auslesen von Daten aus der Funktionsmodulen (118a, 118b) oder zur Steuerung der Funktionsanschlusseinheit (102) oder zum Auslesen von Daten aus der Funktionsanschlusseinheit (102), bildet.

14. Servicemodul (104) zur Bereitstellung von Parameterdaten (405) zur Parametrisierung von Funktionsmodulen (118a, 118b), wobei das Servicemodul (104) einen Serviceanschluss (110) zur Ausgabe der Parameterdaten (405) gemäß einem ersten Kommunikationsprotokoll aufweist, wobei das Servicemodul (104) einen Kommunikationsanschluss (112) zum Empfang der Parameterdaten (405) gemäß einem zweiten Kommunikationsprotokoll aufweist, wobei das Servicemodul (104) ausgebildet ist, die gemäß dem zweiten Kommunikationsprotokoll empfangenen Parameterdaten (405) gemäß dem ersten Kommunikationsprotokoll auszugeben, und wobei das Servicemodul ausgebildet ist, an den Serviceanschluss ein Kennsignal anzulegen, das das Servicemodul identifiziert.

## Claims

1. Function connection unit (102) for connecting functional modules (118a, 118b), having a multiplicity of functional module connections (120a - 120h), to which the functional modules (118a, 118b) can be connected for communication in accordance with a first communication protocol, having a service module (104) with a service connection (110), which can be connected to at least one functional module connection of the multiplicity of functional module connections (120a - 120h) for communication in accordance with the first communication protocol, wherein the service module (104) has a communication connection (112) for communication in accordance with a second communication protocol;
wherein the service module (104) is designed to provide parameter data (405) present on the communication connection (112) in accordance with the second communication protocol to the service connection (110) in accordance with the first communication protocol; and
wherein the function connection unit (102) is designed to configure at least one functional module (118a, 118b) on the basis of the parameter data (405), wherein the service module is designed to apply to the service connection an identification signal which identifies the service module.

2. Function connection unit (102) according to Claim 1, wherein the second communication protocol is a USB protocol.

3. Function connection unit (102) according to Claim 1 or 2, wherein the service module (104) is designed to carry out a protocol conversion, in order to transmit the parameter data (405) received in accordance with the second communication protocol to the functional module connection (120a - 120h) in accordance with the first communication protocol.

4. Function connection unit (102) according to one of the preceding claims, wherein the first communication protocol is a single drop digital communication interface for small sensors and actuators, SDCI, protocol.

5. Function connection unit (102) according to one of the preceding claims, wherein the function connection unit (102) is a master according to the single drop digital communication interface for small sensors and actuators, SDCI.

6. Function connection unit (102) according to one of the preceding claims, wherein the function connection unit (102) is designed to detect the service module (104) connected to at least one functional module connection (120a - 120h).

7. Function connection unit (102) according to one of the preceding claims, wherein the service module (104) is designed to apply to the service connection (110) an identification signal which identifies the service module (104), and wherein the function connection unit (102) is designed to detect the service module (104) on the functional module connection (120a - 120h) on the basis of the identification signal or to distinguish the said service module (104) from a functional module (118a, 118b).

8. Function connection unit (102) according to one of the preceding claims, which is configured to store the parameter data (405).

9. Function connection unit (102) according to Claim 8, wherein the service module (104) can be detached from the functional module connection (120a - 120h), wherein a functional module (118a, 118b) can be connected electrically to the functional module connection (120a - 120h), and wherein the function connection unit (102) is designed to parameterize the functional module (118a, 118b) connected to the functional module connection (120a - 120h) in a device-specific manner instead of the service module (104), by using the parameter data (405) previously stored in the function connection unit (102).

10. Function connection unit (102) according to one of the preceding claims, which is designed to instruct the service module (104) to transmit the parameter data (405) via the service connection (110) .

11. Function connection unit (102) according to one of the preceding claims, wherein the service module (104) can be deactivated, and wherein the function connection unit (102) is designed to activate the service module (104).

12. Function connection unit (102) according to one of the preceding claims, wherein the parameter data (405) specifies physical values of device-specific parameters.

13. Function connection unit (102) according to one of the preceding claims, wherein the service module (104) forms a communication interface of the function connection unit (102) for transmitting data (405), control commands for controlling the functional modules (118a, 118b) or for reading data from the functional modules (118a, 118b) or for controlling the function connection unit (102) or for reading data from the function connection unit (102).

14. Service module (104) for providing parameter data (405) for parameterizing functional modules (118a, 118b), wherein the service module (104) has a service connection (110) for outputting the parameter data (405) in accordance with a first communication protocol, wherein the service module (104) has a communication connection (112) for receiving the parameter data (405) in accordance with a second communication protocol, wherein the service module (104) is designed to output the parameter data (405) received in accordance with the second communication protocol in accordance with the first communication protocol, and wherein the service module is designed to apply to the service connection an identification signal which identifies the service module.

## Revendications

1. Unité de raccordement de fonction (102) pour le raccordement de modules fonctionnels (118a, 118b), comprenant une pluralité de bornes de module fonctionnel (120a - 120h) auxquelles peuvent être raccordés les modules fonctionnels (118a, 118b) pour une communication conformément à un premier protocole de communication ; comprenant un module de service (104) doté d'une borne de service (110) et qui, en vue d'une communication conformément au premier protocole de communication, peut être relié à au moins une borne de module fonctionnel de la pluralité de bornes de module fonctionnel (120a - 120h), le module de service (104) possédant une borne de communication (112) servant à une communication conformément à deuxième protocole de communication ;
le module de service (104) étant configuré pour mettre à disposition au niveau de la borne de service (110), conformément au premier protocole de communication, des données de paramètre (405) présentes au niveau de la borne de communication (112) conformément au deuxième protocole de communication ; et
l'unité de raccordement de fonction (102) étant configurée pour paramétrer au moins un module fonctionnel (118a, 118b) sur la base des données de paramètre (405), le module de service étant configuré pour appliquer à la borne de service un signal d'identification qui identifie le module de service.

2. Unité de raccordement de fonction (102) selon la revendication 1, le deuxième protocole de communication étant un protocole USB.

3. Unité de raccordement de fonction (102) selon la revendication 1 ou 2, le module de service (104) étant configuré pour effectuer une conversion de protocole afin de transmettre aux bornes de module fonctionnel (120a - 120h), conformément au premier protocole de communication, les données de paramètre (405) reçues conformément au deuxième protocole de communication.

4. Unité de raccordement de fonction (102) selon l'une des revendications précédentes, le premier protocole de communication étant un protocole d'interface de communication numérique point à point pour petits capteurs et actionneurs, SDCI (Single-Drop Digital Communication Interface for Small Sensors and Actuators) .

5. Unité de raccordement de fonction (102) selon l'une des revendications précédentes, l'unité de raccordement de fonction (102) étant un maître selon le protocole d'interface de communication numérique point à point pour petits capteurs et actionneurs, SDCI.

6. Unité de raccordement de fonction (102) selon l'une des revendications précédentes, l'unité de raccordement de fonction (102) étant configurée pour détecter le module de service (104) relié à au moins une borne de module fonctionnel (120a - 120h).

7. Unité de raccordement de fonction (102) selon l'une des revendications précédentes, le module de service (104) étant configuré pour appliquer à la borne de service (110) un signal d'identification qui identifie le module de service (104), et l'unité de raccordement de fonction (102) étant configurée pour reconnaître le module de service (104) sur la borne de module fonctionnel (120a - 120h) sur la base du signal d'identification ou le différencier d'un module fonctionnel (118a, 118b).

8. Unité de raccordement de fonction (102) selon l'une des revendications précédentes, laquelle est configurée pour enregistrer les données de paramètre (405) .

9. Unité de raccordement de fonction (102) selon la revendication 8, le module de service (104) pouvant être détaché de la borne de module fonctionnel (120a - 120h), un module fonctionnel (118a, 118b) pouvant être relié électriquement à la borne de module fonctionnel (120a - 120h) et l'unité de raccordement de fonction (102) étant configurée pour paramétrer spécifiquement à l'appareil, à la place du module de service (104), le module fonctionnel (118a, 118b) relié à la borne de module fonctionnel (120a - 120h) en utilisant les données de paramètre (405) préenregistrées dans l'unité de raccordement de fonction (102).

10. Unité de raccordement de fonction (102) selon l'une des revendications précédentes, laquelle est configurée pour ordonner au module de service (104) de transmettre les données de paramètre (405) par le biais de la borne de service (110).

11. Unité de raccordement de fonction (102) selon l'une des revendications précédentes, le module de service (104) pouvant être désactivé et l'unité de raccordement de fonction (102) étant configurée pour activer le module de service (104).

12. Unité de raccordement de fonction (102) selon l'une des revendications précédentes, les données de paramètre (405) indiquant des valeurs physiques de paramètres spécifiques à l'appareil.

13. Unité de raccordement de fonction (102) selon l'une des revendications précédentes, le module de service (104) formant une interface de communication de l'unité de raccordement de fonction (102) pour la transmission de données (405), d'instructions de commande destinées à commander les modules fonctionnels (118a, 118b) ou destinées à lire des données depuis les modules fonctionnels (118a, 118b) ou destinées à commander l'unité de raccordement de fonction (102) ou destinées à lire des données depuis l'unité de raccordement de fonction (102).

14. Module de service (104) destiné à mettre à disposition des données de paramètre (405) servant au paramétrage de modules fonctionnels (118a, 118b), le module de service (104) possédant une borne de service (110) servant à délivrer les données de paramètre (405) conformément à un premier protocole de communication, le module de service (104) possédant une borne de communication (112) servant à recevoir les données de paramètre (405) conformément à un deuxième protocole de communication, le module de service (104) étant configuré pour délivrer, conformément au premier protocole de communication, les données de paramètre (405) reçues conformément au deuxième protocole de communication et le module de service étant configuré pour appliquer à la borne de service un signal d'identification qui identifie le module de service.
